# EUROPEAN PATENT APPLICATION

(11) **EP 2 432 219 A1**
(43) Date of publication of application: **21.03.2012**
(21) Application number: 09844699.0
(22) Date of filing: 24.11.2009
(51) Int. Cl.: H04N 5/655

(54) **ARM FOR WALL MOUNT AND A WALL MOUNT HAVING THE SAME**

(30) Priority: 12.05.2009 KR 20090041401
(71) Applicant: Sentronix Co., Ltd., Suwon-si, Gyeonggi-do 441-822 (KR)
(72) Inventor: LEE, Chil Sung, Suwon-si Gyeonggi-do 440-735 (KR)
(74) Representative: Coyle, Philip Aidan
(86) International application number: PCT/KR2009/006939
(87) International publication number: WO 2010/131825

(57) **Abstract**

An arm for a wall mount and a wall mount having the arm are disclosed. The arm for a wall mount and a wall mount having the arm in accordance with an embodiment of the present invention can include: a frame; a first hinge axle rotatably coupled to one end of the frame; a first driving gear coupled to the first hinge axle; a first gear train installed in the frame so as to be engaged with the first driving gear; and a first motor configured to drive the first gear train, and the first gear train can include: a plurality of axles arranged on a same plane; and a plurality of reduction gears, each of which being rotatably coupled to one of the axles. With the present invention, it becomes possible to provide a wall mount that is slimmer but provides a greater driving force by using a smaller motor.

## Description

### [Technical Field]

The present invention relates to an arm for a wall mount and a wall mount having the arm.

### [Background Art]

Flat-screen display devices, such as LCD TV and PDP TV, which can utilize a narrow space efficiently, are replacing the cathode ray tube TV, and the demand for the flat-screen displays is expected to grow continuously. The flat-screen display devices are often installed on a wall, utilizing the interior space and forming an aesthetic appearance.

Recently, as the flat-screen display devices have become thinner, wall mounts for installing the flat-screen display devices on the wall have become also thinner and slimmer.

Especially, it is required that wall mounts that are equipped with an electromotive device therein to control the distance of the flat-screen display device separated from the wall and to control the angle of viewing have a greater driving force to cope with the flat-screen display devices that are becoming bigger.

Accordingly, there is an increasing demand for a wall mount that has a greater driving force while it is thin enough to keep the flat-screen display device from being separated too much from the wall.

Nevertheless, in order to increase the driving force, the wall mount needs to have a driving unit with a greater torque, that is, a geared motor with a greater size, but this has become technical hindrance for the wall mount from being thinner.

### [Disclosure]

### [Technical Problem]

The present invention provides an arm for a wall mount that has a slim form and has an improved driving force and a wall mount having the arm.

### [Technical Solution]

An aspect of the present invention features an arm for a wall mount, which can include: a frame; a first hinge axle rotatably coupled to one end of the frame; a first driving gear coupled to the first hinge axle; a first gear train installed in the frame so as to be engaged with the first driving gear; and a first motor configured to drive the first gear train. The first gear train can include: a plurality of axles arranged on a same plane; and a plurality of reduction gears, each of which being rotatably coupled to one of the axles.

The plurality of axles can be arranged to be parallel to one another, and the plurality of reduction gears can be inter-rotatably coupled to the axles.

The arm for a wall mount can also include: a second hinge axle rotatably coupled to the other end of the frame; a second driving gear coupled to the second hinge axle; a second gear train installed in the frame so as to be engaged with the second driving gear; and a second motor configured to drive the second gear train. The second gear train can include: a plurality of axles arranged on a same plane; and a plurality of reduction gears, each of which being rotatably coupled to one of the axles.

The first motor can be connected width the first gear train by a timing belt, and the arm for a wall mount can also include a first friction wheel interposed between the first hinge axle and the first driving gear.

Another aspect of the present invention features a wall mount, which can include: a coupling jig coupled to a display device, a first hinge axle being coupled to the coupling jig; an arm to which the first hinge axle is rotatably coupled to one end thereof; a first driving gear coupled to the first hinge axle; a first gear train installed in the arm so as to be engaged with the first driving gear; a first motor driving the first gear train; and a bracket coupled to the other end of the arm and installed on a wall. The first gear train can include: a plurality of axles arranged on a same plane; and a plurality of reduction gears, each of which being rotatably coupled to one of the axles.

The plurality of axles can be arranged to be parallel to one another, and the plurality of reduction gears can be inter-rotatably coupled to the axles.

The wall mount can also include: a second hinge axle coupled to the bracket and rotatably coupled to the other end of the arm; a second driving gear coupled to the second hinge axle; a second gear train installed in the arm so as to be engaged with the second driving gear; and a second motor configured to drive the second gear train. The second gear train can include: a plurality of axles arranged on a same plane; and a plurality of reduction gears, each of which being rotatably coupled to one of the axles.

The coupling jig can include: a support bar coupled to an upper end of the first hinge axle in such a way that both ends thereof are engaged with the display device; and a friction unit supporting a back surface of the display device so as to prevent the display device from waggling, the friction unit being coupled to a lower end of the first hinge axle.

The first motor can be connected with the first gear train by a timing belt, and the wall mount can also include a first friction wheel interposed between the first hinge axle and the first driving gear, and the wall mount can also include a first sensor measuring the amount of rotation of the first hinge axle.

### [Advantageous Effects]

In accordance with the embodiment of the present invention, a slimmer form of wall mount is provided while a greater driving force is provided using a smaller motor.

### [Description of Drawings]

FIG. 1 is a perspective view of a wall mount in accordance with an embodiment of the present invention.
FIG. 2 is a top view showing a portion of the wall mount in accordance with an embodiment of the present invention.
FIG. 3 is a top view showing a first motor, a first gear train and a first hinge axle of the wall mount in accordance with an embodiment of the present invention.
FIG. 4 is a top view showing the first hinge axle in accordance with an embodiment of the present invention.
FIG. 5 is a top view showing a coupling jig of the wall mount in accordance with an embodiment of the present invention.
FIG. 6 is an exploded perspective view of a bracket of the wall mount in accordance with an embodiment of the present invention.

### <Description of Key Elements>

| | |
|---|---|
| 100: arm | 210: first hinge axle |
| 310: first gear train | 410: first motor |
| 500: coupling jig | 600: bracket |
| 710: first sensor | 1000: wall mount |

### [Mode for Invention]

The technical features and advantages of the present invention will become more apparent through the detailed description and accompanying drawings below.

Hereinafter, a certain embodiment of a wall mount in accordance with the present invention will be described with reference to the accompanying drawings. In describing the embodiment with reference to the accompanying drawings, any identical or corresponding elements will be assigned with the same reference numerals, and the description for the identical or corresponding elements will not be redundantly provided.

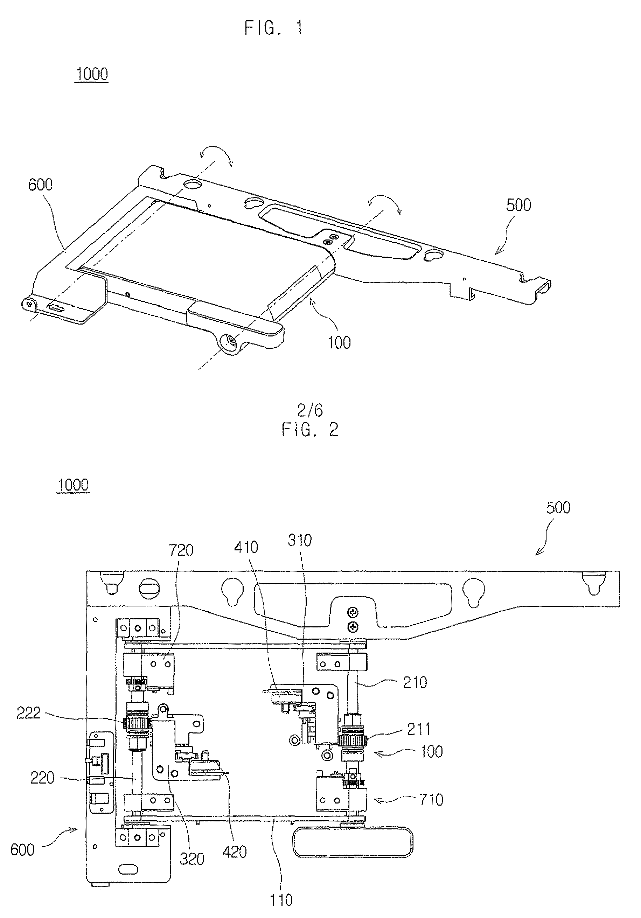

FIG. 1 is a perspective view of a wall mount 1000 in accordance with an embodiment of the present invention. As illustrated in FIG. 1, the wall mount 1000 in accordance with an embodiment of the present invention includes a coupling jig 500, an arm 100 and a bracket 600.

The wall mount 1000 is an apparatus for installing a flat-screen display device on a wall. The bracket 600 is installed on and fixed to the wall, and the coupling jig 500 gets locked with the flat-screen display device. The arm 100 is rotatably hinge-connected between the bracket 600 and the coupling jig 500.

Here, if the coupling jig 500 rotates about one end of the arm 100, the viewing angle of the flat-screen display device can be adjusted, and if the bracket 600 rotates about the other end of the arm 100, the flat-screen display device can be separated from the wall.

In addiction, if the arm 100 rotates about the bracket 600 and the coupling jig 500 simultaneously, the flat-screen display device can be separated from the wall while the flat-screen display device maintains a parallel arrangement with the wall.

FIG. 2 is a top view showing a portion of the wall mount 1000 in accordance with an embodiment of the present invention. As illustrated in FIG. 2, the arm includes a frame 110, a first hinge axle 210, a first driving motor 211, a first gear train 310, a first motor 410, a second hinge axle 220, a second driving gear 222 and a second motor 420.

The frame 110 forms the framework of the arm 100 and takes the form of being extended lengthwise. The frame 110 is formed with a space inside so that components constituting the arm 100 can be installed inside the frame 110,

The first hinge axle 210 is rotatably coupled to one end of the arm 100. The first hinge axle 210 can become a part of the coupling jig 500, which will be described later, and forms an axle to which the arm 100 and the coupling jig 500 can be hinge-connected.

The second hinge axle 220 is rotatably coupled to the other end of the arm 100. The second hinge axle 220 can become a part of the bracket 600, which will be described later, and forms an axle to which the arm 100 and the bracket 600 can be hinge-connected.

The first driving gear 211 is coupled to the first hinge axle 210. The first driving gear 211 can deliver the driving force generated by the first gear train 310, which will be described later, to the coupling jig 500.

The first gear train 310 is installed inside the arm 100 and delivers the driving force generated by the first motor 410 to the first driving gear 211. The first gear train 310 can have a big reduction gear ratio by including a plurality of reduction gears.

The first motor 410 drives the first gear train 310. The first motor 410 is connected by a gear at an end of the first gear train 310 and a timing belt. The timing belt can deliver the rotation by the first motor 410 to the first gear train 310 without any error and can reduce the noise that can be generated during the delivery of driving force between the first motor 410 and the first gear train 310.

A second gear train 320 and the second motor 420 form an arrangement that is point symmetrical with the first gear train 310 and the second motor 420 about a center of the arm 100 and are installed inside the frame 110.

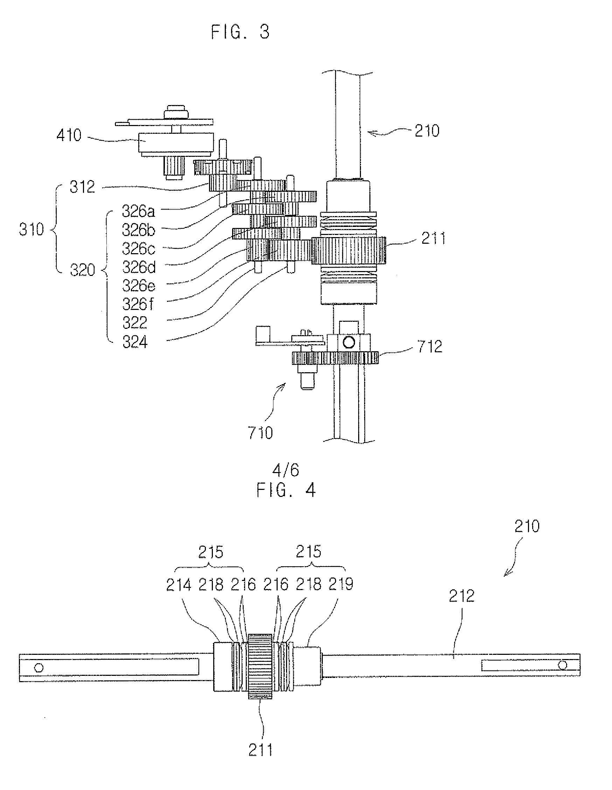

FIG. 3 is a top view showing the first motor 410, the first gear train 310 and the first hinge axle 210 of the wall mount 1000 in accordance with an embodiment of the present invention. As illustrated in FIG. 3, the first gear train 310 includes a delivery gear 312 and a reduction gear section 320.

The delivery gear 312, which is interposed between the first motor 410 and the reduction gear section 320, is delivered with the driving force of the first motor 410 by the timing belt and delivers this driving force to the reduction gear section 320.

The reduction gear section 320 includes two axles 322, 324 and six reduction gears 326a, 326b, 326c, 326d, 326e, 326f, each of which is coupled to either of the two axles 322, 324.

Here, the two axles 322, 324 are placed to be parallel to each other on a same plane. The first motor 410, the delivery gear 312, the axles 322, 324 of the reduction gears 326a, 326b, 326c, 326d, 326e, 326f and the first hinge axle 210 are arranged to be parallel to one another. The reduction gears 326a, 326b, 326c, 326d, 326e, 326f are formed in pairs by being inter-rotatably coupled to the two axles 322, 324 respectively.

When the delivery gear 312 rotates, a first reduction gear 326a, which is engaged with the delivery gear 312, is rotated, and the first reduction gear 326a is engaged with a second reduction gear 326b to deliver the driving force. Accordingly, the rotation speed is reduced and the torque is increased while the driving force generated by the first motor 410 is delivered through the first to sixth reduction gears 326a, 326b, 326c, 32b, 326e, 326f.

Therefore, by arranging a greater number of reduction gears in a limited space, the first gear train 310 can achieve a greater reduction ratio and can use the first motor 410 that is smaller in size and capacity.

The thicknesses of the first gear train 310 and the first motor 410 are major factors determining the thickness of the arm 100, and reduction of the thicknesses of the first gear train 310 and the first motor 410 can critically contribute to realising the arm 100 that is slimmer.

Furthermore, the reduction in the thickness of the arm 100 can reduce the thickness of the wall mount 1000, allowing for the reduction of the distance by which the flat-screen display device is separated from the wall.

In effect, the above arrangement of the first gear train 310, the first motor 410 and the first hinge axle 210 allows for the wall mount 1000 that has a more aesthetic appearance.

The sixth reduction gear 326f, which is coupled to an end of the first gear train 310, is engaged with the first driving gear 211 to deliver the driving force of the first motor 410 to the first hinge axle 210. Accordingly, the first hinge axle 210 is rotated, and the viewing angle of the flat-screen display device can be adjusted by the rotation of the coupling jig 500.

A spur gear 712 can be coupled to the first hinge axle 210 and engaged with a first sensor 710. The first sensor 710 can measure the first hinge axle 210. The first sensor 710 can be realized with a sensor that can measure the amount of rotation, for example, a potential meter.

The second hinge axle 220, the second gear train 320, the second motor 420 and a second sensor 720 can also form the coupling relation as described above.

The wall mount 1000 is electrically connected with the first motor 410, the second motor 420, the first sensor 710 and the second sensor 720, and can include a control unit that controls their operations. The control unit can operate these elements by inputting operation signals to the first motor 410 and the second motor 420.

The control unit can also receive information on the amounts of rotation of the first hinge axle 210 and the second hinge axle 220 from the first sensor 710 and the second sensor 720, respectively, to recognize whether the first motor 410 and the second motor 420 have been operated to reach target amounts of rotation, and can maintain the operation signals to have the first motor 410 and the second motor 420 operated to reach the target amounts of rotation.

FIG. 4 is a top view showing the first hinge axle 210 in accordance with an embodiment of the present invention. As illustrated in FIG. 4, a first friction wheel 215 can be interposed between the first driving gear 211 and the first hinge axle 210.

A shaft 212 is extended lengthwise and is formed with a support 214 near its center The support 214 is formed by being integrated with the shaft 212 and takes a form of being protruded along the circumference of the shaft 212.

The first driving gear 211 is rotatably coupled about the shaft 212. The first friction wheel 215 is coupled to both sides of the first driving gear 211.

The first friction wheel 215 on one side of the first driving gear 211 includes two slip washers 216, which are in contact with the first driving gear 211, a spring washer 218, which is in contact with the slip washer 216, and the support 214.

The spring washer 210, which has the shape of a disc with a hollow space therein, can provide an elastic force to its vertical directions due to the difference in height between its inner side and outer side, and provides the elastic force by being interposed between the slip washer 216 and the support 214.

The first friction wheel 215 on the other side of the first driving gear 211 includes two slip washers 216, two spring washers 218 and a nut 219. The slip washers 216 are in contact with the first driving gear 211, and the spring washers 218 are interposed between the slip washers 216 and the nut 219.

The nut 219 is engaged with threads formed on an outer surface of the shaft 212 to press the spring washers 218 toward the support 214. Therefore, the frictional force between the first driving gear 211 and the shaft 212 can be adjusted by adjusting the amount of rotation of the nut 219. Accordingly, the point in time when slip can occur between the first driving gear 211 and the shaft 212 can be adjusted.

In effect, if the coupling jig 500 is rotated by an eternal force, the first friction wheel 215 can prevent the first motor 410 and the first gear train 310 from being damaged by the external force.

The second hinge axle 220 and the second driving gear 222 also have the same coupling relation as described above with reference to the first hinge axle 210 and the first driving gear 211.

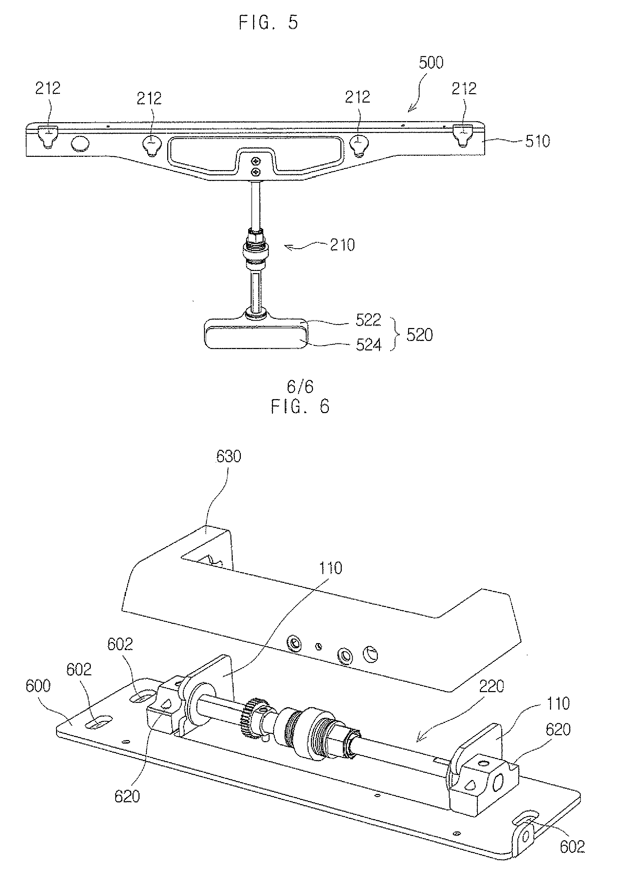

FIG. 5 is a top view showing the coupling jig 500 of the wall mount 1000 in accordance with an embodiment of the present invention. As illustrated in FIG. 5, the coupling jig 500 includes a support bar 510, the first hinge axle 210 and a friction unit 520.

The coupling jig 500 the part that can couple the flat-screen display device to the wall mount 1000 by being engaged with the flat-screen display device.

The center of the support bar 510 is coupled to an upper end of the first hinge axle 210 and has a form of being extended to both sides. Formed on one surface of the support bar 510 are engaging holes 212 for easy engagement with the flat-screen display device. The engaging holes 212 provide holes through which a back surface of the flat-screen display device can be screwed. In effect, the support bar 510 is engaged with both sides of the back surface of the flat-screen display device to support two points of on either side of the flat-screen display device.

The center of the friction unit 520 is coupled to a lower end of the shaft 212. The friction unit 520 includes a support plate 522, which is coupled to a lower end of the hinge axle 210, and rubber 524, which is coupled to one surface of the support plate 522. By supporting a lower side of the flat-screen display device with the rubber 524, the friction unit 520 can prevent the flat-screen display device from waggling. Here, it shall be evident that the rubber 524 can be substituted with another material that can provide sufficient friction with the back surface of the flat-screen display device.

In effect, by forming a three-point support structure with the flat-screen display device, the coupling jig 500 can support the flat-screen display device in a stable manner while improving the convenience of installation by reducing the engaging locations to two points.

FIG. 6 is an exploded perspective view of the bracket 600 of the wall mount 1000 in accordance with an embodiment of the present invention. As illustrated in FIG. 6, the second hinge axle 220 is coupled to the bracket 600 by an engaging jig 620. The engaging jig 620 is coupled to both ends of the second hinge axle 220 in a manner that the bracket 600 has no relative rotation about the second hinge axle 220.

The bracket 600 is formed with two installation holes 602 on its upper side and one installation hole 602 on its lower side for easy installation on the wall.

A cover 630 covers the second hinge axle 220 and the bracket 600 to improve the external appearance of the bracket 600.

Although a certain embodiment has been described above, it shall be appreciated that there can be a large number of permutations and modifications of the invention by those who are skilled in the art to which the present invention pertains without departing from the technical ideas and scope of the invention that shall be defined by the appended claims.

## Claims

1. An arm for a wall mount comprising:
a frame;
a first hinge axle rotatably coupled to one end of the frame;
a first driving gear coupled to the first hinge axle;
a first gear train installed in the frame so as to be engaged with the first driving gear; and
a first motor configured to drive the first gear train,
wherein the first gear train comprises:
a plurality of axles arranged on a same plane; and
a plurality of reduction gears, each of which being rotatably coupled to one of the axles.

2. The arm for a wall mount of claim 1, wherein the plurality of axles are arranged to be parallel to one another.

3. The arm for a wall mount of claim 2, wherein the plurality of reduction gears are inter-rotatably coupled to the axles.

4. The arm for a wall mount of claim 1, further comprising:
a second hinge axle rotatably coupled to the other end of the frame;
a second driving gear coupled to the second hinge axle;
a second gear train installed in the frame so as to be engaged with the second driving gear; and
a second motor configured to drive the second gear train,
wherein the second gear train comprises:
a plurality of axles arranged on a same plane; and
a plurality of reduction gears, each of which being rotatably coupled to one of the axles.

5. The arm for a wall mount of claim 1, wherein the first motor is connected with the first gear train by a timing belt.

6. The arm for a wall mount of claim 1, further comprising a first friction wheel interposed between the first hinge axle and the first driving gear.

7. A wall mount, comprising:
a coupling jig coupled to a display device, a first hinge axle being coupled to the coupling jig;
an arm to which the first hinge axle is rotatably coupled to one end thereof;
a first driving gear coupled to the first hinge axle;
a first gear train installed in the arm so as to be engaged with the first driving gear;
a first motor driving the first gear train; and
a bracket coupled to the other end of the arm and installed on a wall,
wherein the first gear train comprises:
a plurality of axles arranged on a same plane; and
a plurality of reduction gears, each of which being rotatably coupled to one of the axles.

8. The wall mount of claim 7, wherein the plurality of axles are arranged to be parallel to one another.

9. The wall mount of claim 8, wherein the plurality of reduction gears are inter-rotatably coupled to the axles.

10. The wall mount of claim 7, further comprising:
a second hinge axle coupled to the bracket and rotatably coupled to the other end of the arm;
a second driving gear coupled to the second hinge axle;
a second gear train installed in the arm so as to be engaged with the second driving gear; and
a second motor configured to drive the second gear train,
wherein the second gear train comprises:
a plurality of axles arranged on a same plane; and
a plurality of reduction gears, each of which being rotatably coupled to one of the axles.

11. The wall mount of claim 7, wherein the coupling jig comprises:
a support bar coupled to an upper end of the first hinge axle in such a way that both ends thereof are engaged with the display device; and
a friction unit supporting a back surface of the display device so as to prevent the display device from waggling, the friction unit being coupled to a lower end of the first hinge axle.

12. The wall mount of claim 7, wherein the first motor is connected with the first gear train by a timing belt.

13. The wall mount of claim 7, further comprising a first friction wheel interposed between the first hinge axle and the first driving gear.

14. The wall mount of claim 7, further comprising a first sensor measuring the amount of rotation of the first hinge axle.
